# EUROPEAN PATENT APPLICATION

(11) **EP 4 717 936 A1**
(43) Date of publication of application: **01.04.2026**
(21) Application number: 24383026.2
(22) Date of filing: 25.09.2024
(51) Int. Cl.: F16B 39/10

(54) **LOCKING DEVICE FOR STRUCTURAL JOINTS IN AIRCRAFTS**

(71) Applicant: Airbus Operations, S.L.U., 28906 Getafe, Madrid (ES)
(72) Inventor: JONES, John Arthur, 28906 GETAFE (Madrid) (ES)
(74) Representative: Herrero & Asociados, S.L.

(57) **Abstract**

The locking device comprises a retention screw (1) and an anti-rotation retention ring (2) that is engaged to the retention screw (2). Preferably, the locking device also comprises a support body (3), wherein the support body (3) comprises a pair of clamping elements (4) placed in opposite ends of the support body (3).

It permits to provide a locking device for structural joints in aircrafts that prevents or at least reduces the migration of the structural joints in aircrafts, providing an increased security and reducing the time required for service.

## Description

The present invention relates to a locking device for structural joints in aircrafts, that prevents bush migration of bolting pins.

### Background of the invention

Bush migration is a known in-service issue which causes airlines to ground aircraft until a solution is provided by the manufacturer, during scheduled maintenance tasks, the airline will check for bush and pin migration at different joints such as vertical tailplane to fuselage or horizontal tailplane to fuselage.

It is common to find some bush migration or rotation which causes concern as the effectivity of the contact surfaces is reduced and the load transfer is no longer 100% effective.

Migration of bushes is due in part because of vibration of the structure that over time makes the pins move and the locking nut to come lose.

In order to avoid bush migration and rotation, past solutions have considered using higher value torques in order to have a higher pre-tension on the pin and therefore try to prevent the movement of the bush.

However, there are disadvantages to this as normally the joints are calculated to a pre-tension values that, if exceeded, they can cause the fittings to have a higher stresses, effectively the fittings are not usually design for high values of pre-tension due to torquing and therefore the airlines cannot exceed those values. There are also limitations in service to torque to higher values due to tooling and access constraints.

### Description of the invention

Therefore, an objective of the present invention is to provide a locking device for structural joints in aircrafts that prevents or at least reduces the migration of the structural joints in aircrafts, providing an increased security and reducing the time required for service.

The locking device for structural joints in aircrafts of the invention solves the above-mentioned disadvantages and has other advantages which will be described below.

The locking device for structural joints in aircrafts according to the present invention is described in claim 1, and the dependent claims include additional features that are optional.

In particular, the locking device for structural joints in aircrafts comprises a retention screw, and an anti-rotation retention ring that is engaged to the retention screw.

Furthermore, preferably the locking device also comprises a support body.

Preferably, the support body comprises a pair of clamping elements placed in opposite ends of the support body, and each clamping element is clamped to the support body by a clamping screw.

According to two alternative embodiments, each clamping element comprises a flange, or each clamping element is a supporting bead.

According to a preferred embodiment, the support body is an elongated strip.

Furthermore, the anti-rotation retention ring preferably comprises a protrusion.

### Brief description of the drawings

For a better understanding of what has been explained above, some drawings are included in which, schematically and only by way of a non-limiting example, a practical case of embodiment is represented.
Figure 1 is a plan view of a first embodiment of the locking device according to the present invention;
Figure 2 is a side view of the first embodiment shown in Figure 1;
Figure 3 is a detail of the locking device of the first embodiment shown in Figure 2;
Figure 4 is a plan view of a second embodiment of the locking device according to the present invention;
Figure 5 is a side view of the second embodiment shown in Figure 4;
Figure 6 is a detail of the locking device of the second embodiment shown in Figure 5; and
Figure 7 is a perspective view of the locking device applied on a structural joint of an aircraft.

### Description of a preferred embodiment

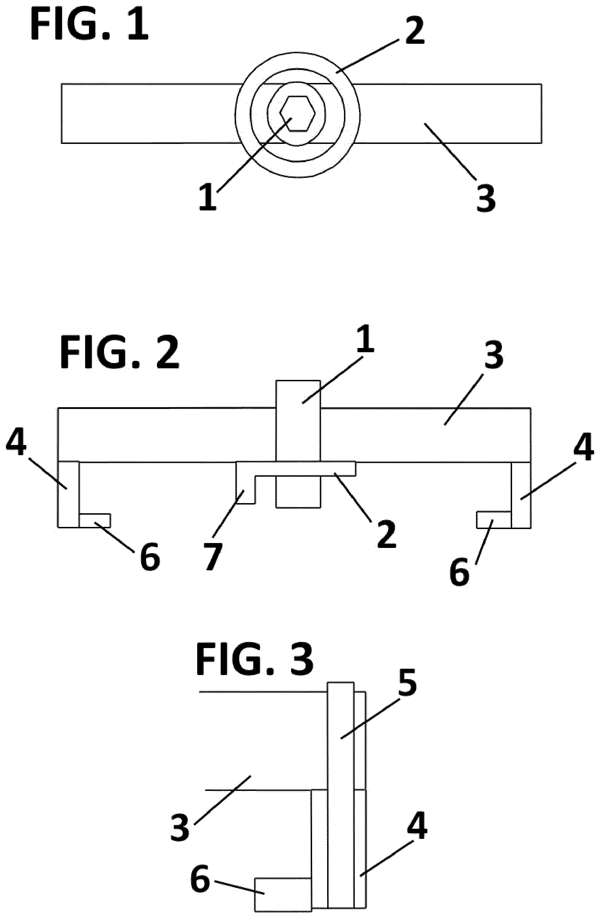

Figures 1, 2 and 3 show a first embodiment of the locking device according to the present invention.

This locking device comprises a retention screw (1), an anti-rotation retention ring (2) and a support body (3), as shown in these drawings.

The anti-rotation retention ring (2) is engaged to the retention screw (1), preventing is rotation, and also preventing or reducing the migration of the structural joint on which the locking device is installed.

This anti-rotation retention ring (2) comprises preferably a protrusion (7), as shown in Figure 2.

The support body (3) is preferably an elongated strip and comprises in each end a clamping element (4), for clamping the support body (3) on the structural joint.

In this first embodiment, each clamping element (4) is clamped to the support body (3) by a clamping screw (5) and each clamping element (4) comprises a flange (6) that is directed to the opposite end.

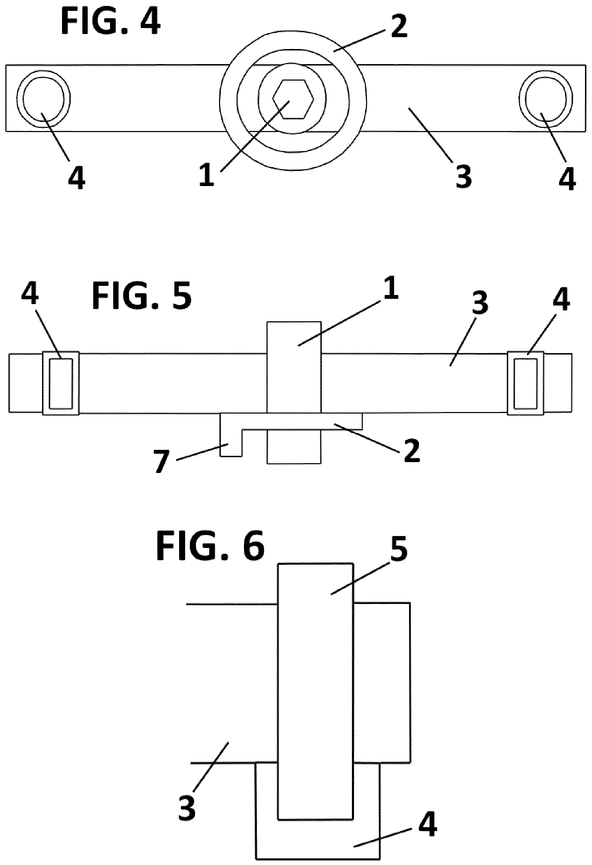

A second embodiment of the locking device is shown in Figures 4, 5 and 6. For simplicity reasons, the same numeral references are used for indicating the same or equivalent elements.

The only difference between this second embodiment and the first embodiment is the clamping element (4), that in this second embodiment is a supporting bead.

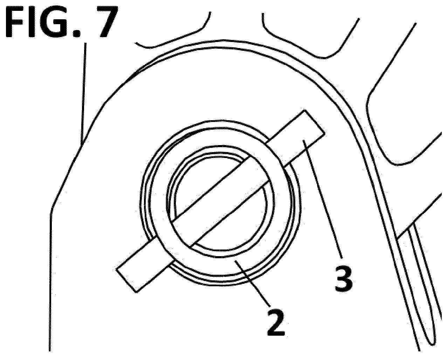

In Figure 7, just as an example, the locking device according to the present invention is shown installed on a structural joint of an aircraft.

## Claims

1. Locking device for structural joints in aircrafts, comprising a retention screw (1), **characterized in that** the locking device also comprises an anti-rotation retention ring (2) that is engaged to the retention screw (2).

2. Locking device for structural joints in aircrafts according to claim 1, wherein the locking device also comprises a support body (3).

3. Locking device for structural joints in aircrafts according to claim 2, wherein the support body (3) comprises a pair of clamping elements (4) placed in opposite ends of the support body (3).

4. Locking device for structural joints in aircrafts according to claim 3, wherein each clamping element (4) is clamped to the support body by a clamping screw (5).

5. Locking device for structural joints in aircrafts according to claim 3 or 4, wherein each clamping element (4) comprises a flange (6).

6. Locking device for structural joints in aircrafts according to claims 3 or 4, wherein each clamping element (4) is a supporting bead.

7. Locking device for structural joints in aircrafts according to claim 2, wherein the support body (3) is an elongated strip.

8. Locking device for structural joints in aircrafts according to claim 1, wherein the anti-rotation retention ring (2) comprises a protrusion (7).
